# EUROPEAN PATENT APPLICATION

(11) **EP 1 246 115 A1**
(43) Date of publication of application: **02.10.2002**
(21) Application number: 99961431.6
(22) Date of filing: 27.12.1999
(51) Int. Cl.: G06F 19/00

(54) **TRADE ASSISTING SYSTEM, USED-CAR TRADE ASSISTING SYSTEM, TRADE ASSISTING METHOD, AND USED-CAR TRADE ASSISTING METHOD**

(71) Applicant: Asia Business Venture Holdings PTE Ltd., Singapore 068911 (SG)
(72) Inventor: ITO, Seiji, Abiko-shi, Chiba 270-1163 (JP)
(74) Representative: Grünecker, Kinkeldey, Stockmair & Schwanhäusser Anwaltssozietät
(86) International application number: JP9907351
(87) International publication number: WO01048671

(57) **Abstract**

A used car sales support system 10 includes a sales request input unit 12 for receiving information related to a sales-requested used car from a sales requestor, a storage unit 14 for storing the information related to the sales-requested used car, a purchase request input unit 16 for receiving an input of information related to a purchase-requested used car of a purchase requestor, a presenting unit 18 for a purchase requestor to extract information of a specific sales-requested used car and present it to the purchase requestor, and a presenting unit 20 for an auctioneer to present to an auctioneer information of a sales-requested used car which is sold at an auction upon the elapse of a predetermined period of time from the date the information related to this sales-requested used car was received by the sales request input unit 12.

## Description

### Technical Field

The present invention relates to a sales support system and method for supporting business transactions between a sales requestor who requests to sell an article and a purchase requestor who requests to purchase the article and, more particularly, to a sales support system and method suitably used for a used car sales support system and method for supporting business transactions for used cars between a sales requestor who requests to sell a used car and a purchase requestor who requests to purchase the used car.

### Background Art

An article requested by a sales requestor rarely matches an article requested by a purchase requestor in transactions for articles between general consumers. To promote transactions for articles between the general consumers, some mechanism is required to match the article requested by the sales requestor with the article requested by the purchase requestor. For this purpose, in transactions for used cars, for example, a mechanism is constructed in which a used car dealer mediates between the used car sales requestor and purchase requestor. The used car dealer purchases a used car from the sales requestor and resells it to the purchase requestor.

The used car dealer stores data of the used car purchased from the sales requestor in a database using a computer. The used car dealer then pushes the used car by presenting the used car information stored in the database to the purchase requestor. When the used car dealer constructs a large database by purchasing used cars from sales requestors as many as possible, the probability that a used car requested by a sales requestor matches a used car requested by a purchase requestor increases. The used car can be smoothly sold from the sales requestor to the purchase requestor via the used car dealer. Note that the used car dealer earns the difference between the purchase and sales prices of the used car.

### Disclosure of the Invention

In a conventional system in which data of a used car purchased from a sales requestor is stored in a database using a computer, and the used car information stored in the database is presented to a purchase requestor, an article for which no consensus is reached between the sales requestor and purchase requestor remains undistributed for extended periods of time, and sales of articles (used cars) cannot be sufficiently promoted. The present invention has been made to solve the conventional problem described above, and has as its object to provide a sales support system and method capable of sufficiently promoting sales of articles (used cars).

In order to achieve the above object, a sales support system according to the present invention is characterized by comprising first input means for receiving an input of information related to an article sales-requested by a sales requestor who requests to sell the article, storage means for storing information related to the sales-requested article and received by the first input means, first presenting means for presenting the information related to the sales-requested article and stored in the storage means to a purchase requestor who requests to purchase an article, and second presenting means for presenting, to an auctioneer who sells the sales-requested article at an auction, the information related to the sales-requested article so as to sell the sales-requested article at the auction when a predetermined period of time has elapsed upon receiving the information related to the sales-requested article by the first input means.

Since the information related to the sales-requested article is presented to the auctioneer the predetermined period of time after the information related to the sales-requested article is received, an article for which no consensus is reached between the sales requestor and purchase requestor can be auctioned. As a result, sales of articles including articles for which no consensus is reached between the sales requestor and purchase requester can be sufficiently promoted.

In order to achieve the above object, a sales support method according to the present invention is characterized by comprising the first input step of receiving, using first input means, an input of information related to a sales-requested article requested by a sales requestor who requests to sell the article, the storage step of storing, in storage means, information related to the sales-requested article which is received in the first input step, the first presenting step of presenting, using presenting means, the information related to the sales-requested article and stored in the storage step to a purchase requestor who requests to purchase an article, and the second presenting step of presenting, to an auctioneer who sells the sales-requested article at an auction using the presenting means, the information related to the sales-requested article so as to sell the sales-requested article at the auction when a predetermined period of time has elapsed upon receiving the information related to the sales-requested article in the first input step.

Since the information related to the sales-requested article is presented to the auctioneer the predetermined period of time after the information related to the sales-requested article is received, an article for which no consensus is reached between the sales requestor and purchase requestor can be auctioned. As a result, sales of articles including articles for which no consensus is reached between the sales requestor and purchase requestor can be sufficiently promoted.

### Brief Description of the Drawings

Fig. 1 is a block diagram showing the system configuration of a used car sales support system according to an embodiment of the present invention; and
Fig. 2 is a flow chart showing the sequence for selling a used car using the used car sales support system of the embodiment of the present invention.

### Best Mode of Carrying Out the Invention

An embodiment of a sales support system according to the present invention will be described with reference to the accompanying drawings. This embodiment is related to a used car sales support system for supporting sales of used cars.

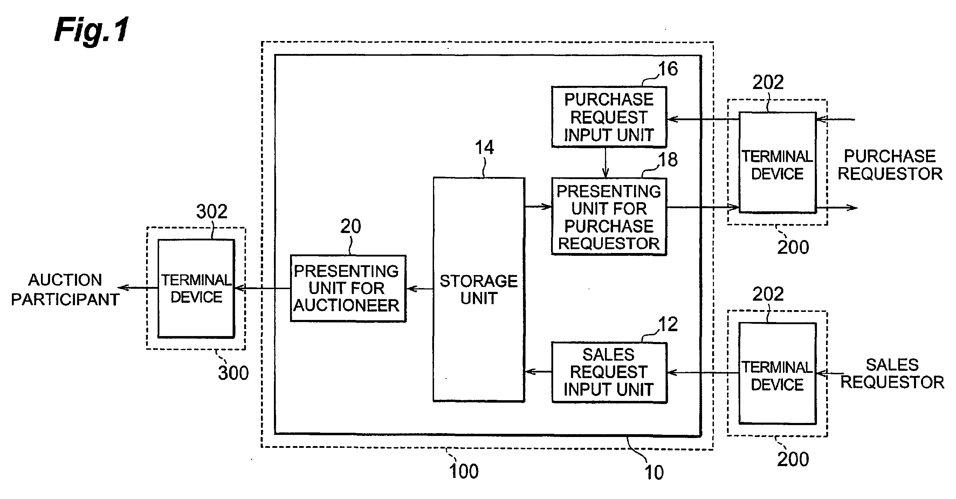

The arrangement of the used car sales support system according to the embodiment will be described below. Fig. 1 is a block diagram showing the system configuration of the used car sales support system of this embodiment. As Shown in Fig. 1, a used car sales support system 10 of this embodiment comprises a sales request input unit 12 (first input means), a storage unit 14 (storage means), a purchase request input unit 16 (second input means), a presenting unit 18 for a purchase requestor (first presenting means), and a presenting unit 20 for an auctioneer (second presenting means). The used car sales support system 10 is installed in a central management center where a franchiser 200 who manages used car sales using the system of this embodiment is located. A terminal device 202 installed in each of a plurality of franchisers 200 is connected to a terminal device 302 of an auctioneer 300 using a telephone line or the like. The respective constituent components will be described in detail below.

The sales request input unit 12 receives information related to a sales-requested used car requested for sales by a sales requestor who requests to sell the used car. The information related to the sales-requested used car can be input by the sales requestor at the terminal device 202 installed in the franchiser 200. More specifically, the sales request input unit 12 provides an input format for inputting information related to sales-requested used car to the terminal device 202 installed in the franchiser 200. This input format is displayed on the display of the terminal device 202. The sales requestor who requests sales of the used car can input information related to the sales-requested used car using the keyboard, mouse, and the like of the terminal device 202. The sales request input unit 12 receives the information related to the sales-requested used car input from the terminal device 202 and transmitted via the telephone line or the like.

The information related to the sales-requested used car includes, e.g., a model, color, year, mileage, and accident history. The information related to the sales-requested used car can include a still image representing the outer appearance of the sales-requested used car, a moving image representing the running state of the sales-requested used car, and audio data obtained by recording engine sounds of the sales-requested used car. In addition, an amount assessed by the franchiser 200 may be included in the information related to the sales desired used car to allow smooth negotiation for a sales price. It is, however, possible not to include the opinion of the franchiser 200 in the information related to the sales-requested used car. When the opinion of the franchiser 200 is not included in the information related to the sales-requested used car, a price can be arbitrarily set by the sales requestor, and the personnel cost of the franchiser 200 can be omitted.

The storage unit 14 stores the information related to the sales-requested used car and received by the sales request input unit 12. The storage unit 14 constructs a database which can be searched for the information related to the sales-requested used car using a model, year, mileage, assessed amount (or desired sales price), or the like as a key. The storage unit 14 stores the date the information related to the sales desired used car was received by the sales request input unit 12, in relation to the information related to the sales-requested used car.

The purchase request input unit 16 receives an input of information related to a used car purchase-requested by a purchase requestor who requests the purchase of a used car. The information related to the purchase-requested used car can be input by the purchase requestor at the terminal device 202 installed in the franchiser 200. More specifically, the purchase request input unit 16 provides an input format for inputting information related to purchase-requested used car to the terminal device 202 installed in the franchiser 200. This input format is displayed on the display of the terminal device 202. The purchase requestor who requests purchase of the used car can input information related to the purchase request used car using the keyboard, mouse, and the like of the terminal device 202. The purchase request input unit 16 receives the information related to the purchase-requested used car input from the terminal device 202 and transmitted via the telephone line or the like.

The information related to the purchase-requested used car represents conditions imposed on a used car requested for purpose by the purchase requestor. The conditions generally include a model. However, only a desired purchase price may be input without specifying the model. In addition to the model, conditions narrowed down to include the color, year, mileage, and accident history may be input. As the car model, a detailed product name (e.g., Y manufactured by X Corp.) can be input. In addition, a wide choice such as the type of used car (e.g., sedan) can be input. The year, mileage, and desired purchase price may be input in a range having a predetermined width (e.g., the desired purchase price ranges from ¥600,000 to ¥800,000). The color can be input with an alternative choice (e.g., red or yellow).

The presenting unit 18 for the purchase requestor presents the information related to the sales-requested used car and stored in the storage unit 14 to the purchase requestor who requests purchase of the used car. More specifically, the presenting unit 18 for the purchase requestor extracts information related to a specific sales request used car from the information related to the sales-requested used cars stored in the storage unit 14 on the basis of the information related to the purchase-requested used car, input by the purchase requestor, and received by the purchase request input unit 16. The presenting unit 18 then presents the extracted information related to the specific sales-requested used car to the purchase requestor. More specifically, the presenting unit 18 for the purchase requestor searches the information related to the sales-requested used cars and stored in the storage unit 14 by using, as a key, a condition input by the purchase requestor as information related to the purchase-requested used car. The presenting unit 18 extracts the information related to the sales-requested used cars and satisfying the input condition. For example, when the purchase requestor inputs conditions such as "red" "sedan" and a "desired purchase price of ¥600,000 to ¥800,000" as the information related to the purchase-requested used car, the presenting unit 18 for the purchase requestor extracts the information related to the sales-requested used cars, i.e., red sedans having assessed amounts (or desired sales price) of ¥600,000 to ¥800,000. The presenting unit 18 presents the extracted information related to the sales-requested used cars to the purchase requester. Note that the information related to the sales-requested used cars is presented to the purchase requester via the display of the terminal device 202 installed in the franchiser 200. In this case, when the information related to the sales-requested used cars is made to contain still images representing the outer appearances of sales-requested used cars, moving images representing the sales-requested used cars in motion, and audio data obtained by recording engine sounds of the sales-requested used cars, the presenting unit 18 for the purchase requestor also presents these pieces of information to the purchase requestor. Note that when a used car sales contract is made between a specific sales requestor and a specific purchase requestor, the storage unit 14 deletes the information related to the sales-requested used car in this contract or inhibits access to the information related to the sales-requested used car in this contract from other purchase requestors.

The presenting unit 20 for the auctioneer presents the information related to the sales-requested used car to an auctioneer who sells this sales-requested used car at an auction a predetermined period of time after the sales request input unit 12 receives the information related to this sales desired used car. More specifically, as described above, the storage unit 14 stores the date the information of the above sales request used car was received, in relation to the information related to the same sales-requested used car. The presenting unit 20 for the auctioneer periodically refers to this date and transmits, to the terminal device 302 of the auctioneer 300, the information related to the sales-requested used car and having elapsed two weeks after the information related to this sales-requested used car was received. When the information related to the sales-requested used car is transmitted to the terminal device 302 of the auctioneer 300, the storage unit 14 deletes the transmitted information related to the sales-requested used car or inhibits access to the information related to this sales-requested used car and transmitted from the purchase requestor. The auctioneer 300 presents the transmitted information related to the sales-requested used car to buyers and auctions this sales-requested used car.

The sequence for selling a used car using the used car sales support system 10 of this embodiment will be described to also explain a sales support method of this embodiment. Note that the used car sales support method of the present invention is included in the sales support method of the present invention.

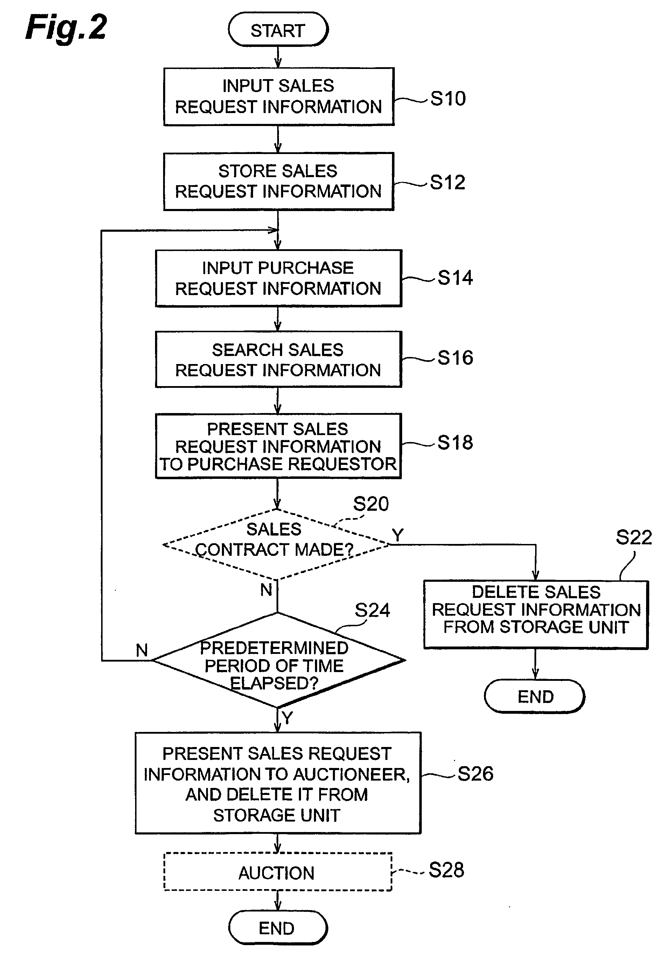

Fig. 2 is a flow chart showing the sequence of selling a used car using the used car sales support system 10 of this embodiment. Sales of a used car using the used car sales support system 10 of this embodiment is started when a sales requestor who requests sales of a used car inputs, at the terminal device 202 installed in the franchiser 200, information related to a sales-requested used car requested for sales by the sales requestor who requests to sell the used car (S10). More specifically, an input format for inputting information related to the sales-requested used car is provided from the sales request input unit 12 to the terminal device 202 installed in the franchiser 200. The input format is displayed on the display of the terminal device 202. When information related to the sales-requested used car is input in accordance with the input format, the input information related to the sales-requested used car is transmitted to the sales request input unit 12 via the telephone line or the like and received by the sales request unit 12.

As the information related to the sales-requested used car, for example, a model, color, year, mileage, and accident history can be used. A still image representing the outer appearance of the sales-requested used car, a moving image representing the sales-requested used car in motion, and audio data obtained by recording engine sounds of the sales-requested used car may be contained. The information related to the sales-requested used car may contain an amount assessed by the franchiser 200 or may not contain the opinion of the franchiser 200. When the information related to the sales-requested used car contains the assessed amount by the franchiser 200, the sales price can be smoothly negotiated. When the information related to the sales-requested used car does not contain the opinion of the franchiser 200, the sales price can be freely set by the sales requestor, and the personnel cost of the franchiser 200 can advantageously be reduced.

Information related to a sales-requested used car may be input so as to ask for transfer of the sales-requested used car to the franchiser 100 who manages the used car sales support system 10, or to contain only information related to the sales-requested used car without the transfer. If the transfer of the sales-requested used car is included, the franchiser 100 or 200 can advantageously manage the information related to the sales-requested used car and its entity. A purchase requestor can avoid a trouble in which information related to a sales-requested used car can be referred to, but the car does not exist. When the transfer of the sales-requested used car is not included, the franchiser 100 or 200 can advantageously get rid of a risk in terms of inventory.

The information related to the sales-requested used car received by the sales request input unit 12 is stored in the storage unit 14 (S12). The storage unit 14 stores the information related to the sales-requested used car in a database which can be searched for desired information by using, as keys, a model, color, year, mileage, assessed amount (or desired sales price), and the like. The storage unit 14 stores the date the information related to the sales desired used car was received by the sales request input unit 12, in relation to the information related to the sales-requested used car. When many sales requestors who request to sell used cars input information related to many used cars, a complete used car database can be constructed in the storage unit 14. As a result, a purchase requestor who requests to purchase a used car can select a desired used car from many choices and purchase it.

A purchase requestor who requests to purchase a used car inputs information related to a purchase-requested used car at the terminal device 202 installed in the franchiser 200 (S14). More specifically, the purchase request input unit 16 supplies an input format for inputting information related to a purchase-requested used car to the terminal device 202 installed in the franchiser 200. The input format is displayed on the display of the terminal device 202. The information related to the purchase-requested used car input in accordance with the input format by the purchase requestor is transmitted to the purchase request input unit 16 via a telephone line or the like and received by the purchase request input unit 16.

The information related to the purchase-requested used car generally includes a model name, but only a desired purchase price may be input without specifying the model name. Conditions including a color, year, mileage, accident history, and the like may be input.

When the purchase request input unit 16 receives the information related to the purchase-requested used car input by the purchase requestor, the presenting unit 18 for the purchase requestor searches information related to sales-requested used cars stored in the storage unit 14 (S16). More specifically, pieces of information related to specific sales-requested used car are extracted from all the pieces of information related to sales-requested used cars stored in the storage unit 14 on the basis of the information related to the purchase-requested used car, input by the purchase requestor, and received by the purchase request input unit 16. More specifically, the pieces of information related to the sales-requested used cars and stored in the storage unit 14 are searched using, as a key, conditions input by the purchase requestor as the information related to the purchase-requested used car. Pieces of information related to sales-requested used cars and satisfying the above conditions are extracted. For example, when the purchase requestor inputs conditions as a "red" "sedan" whose "desired purchase price is ¥600,000 to ¥800,000", pieces of information related to red sedans whose assessed amounts (or desired sales prices) range ¥600,000 to ¥800,000 as sales-requested used cars are extracted from all the pieces of information related to the sales-requested used cars and stored in the storage unit 14.

The pieces of information related to the sales-requested used cars and extracted by the presenting unit 18 for the purchase requestor as described above are presented to the purchase requestor by the presenting unit 18 for the purchase requestor (S18). In this case, the pieces of information related to the sales-requested used cars are presented to the purchase requestor via the display of the terminal device 202 installed in the franchiser 200. If each information related to the sales-requested used car contains a still image representing the outer appearance of the sales-requested used car, a moving image representing the sales-requested used car in motion, and audio data obtained by recording engine sounds of the sales-requested used car, these pieces of information are also presented to the purchase requestor.

When the extracted pieces of information related to the sales-requested used car are presented to the purchase requestor, a sales negotiation or contract is made between the purchase and sales requestors on the basis of the information related to the sales-requested used car (S20). A form used in the used car sales support system 10 or a form determined between the purchase and sales requestors independently of the used car sales support system 10 may be used for the above sales negotiation or contract. When the form used in the used car sales support system 10 is employed, sales negotiation procedures and sales contract format are prepared in the used car sales support system 10 to allow both the purchase requestor and the sales requestor to smoothly proceed with the sales negotiation and sales contract. On the other hand, when the used car sales support system 10 is defined as a system for introducing sales requestors to purchase requestors, and the sales and purchase requestors employ the sales negotiation and sales contract forms independently of the used car sales support system 10, the franchiser 100 or 200 can advantageously get rid of a trouble between purchase and sales requestors.

When a sales contract is made between purchase and sales requestors, the information related to the sales-requested used car in this contract is deleted from the storage unit 14 or inhibited to access by other purchase requestors (S22). As a result, the information related to the sales-requested used car in this contract is no longer presented to other purchase requestors.

When a predetermined period of time has elapsed without any sales contract since information related to a sales-requested used car by the sales request input unit 12 was received (S24), the information related to the sales-requested used car is presented to an auctioneer 300 who sells this used car at an auction (S26). More specifically, the date the information related to the sales-requested used car, which is stored in relation to the corresponding information related to the sales-requested used car, was received is periodically referred to by the presenting unit 20 for the auctioneer. All pieces of information related to sales-requested used cars for which two weeks have elapsed from the dates these pieces of information were received are transmitted to the terminal device 302 of the auctioneer 300. The information transmitted to the terminal device 302 of the auctioneer 300 is deleted from the storage unit 14 or inhibited to access by purchase requestors (S26). The information related to the sales-requested used car and transmitted to the terminal device 302 of the auctioneer 300 is no longer presented to other purchase requestors.

Upon reception of the information related to the sales-requested used car, the auctioneer 300 sells this used car at an auction (S28). In this case, together with transmission of the information related to the sales-requested used car, the sales-requested used car may be transferred from the franchiser 100 or 200 or the sales requestor to the auctioneer. Alternatively, upon knocking down to the purchase requestor, the sales-requested used car may be transferred from the sales requestor to a successful bidder. By employing the various transaction forms described above, the franchisers 100 and 200, the sales requestor, and the auctioneer receive their benefits. For example, when the sales-requested used car is directly transferred from the sales requestor to the successful bidder, the franchisers 100 and 200 and the auctioneer 300 can advantageously get rid of a risk in terms of inventory.

The functions and effects of the used car sales support system according to this embodiment will be described below. The used car sales support system 10 according to this embodiment presents, to the auctioneer, the information related to the sales-requested used car upon the elapse of a predetermined period of time from reception of the information related to this sales-requested used car. A used car for which no consensus is reached between the sales and purchase requestors upon the elapse of the predetermined of time can be sold at an auction. As a result, sales of used cars including used cars for which no consensus is reached between sales and purchase requestors can be sufficiently promoted.

The used car sales support system 10 according to the present invention presents to a purchase requestor information related to a specific sales-requested used car on the basis of the information related to a purchase-requested used car and input by the purchase requestor. Only pieces of information related to sales-requested used car matching the conditions requested by the purchase requestor can be presented to this purchase requestor. As a result, pieces of information related to sales-requested used cars can be efficiently presented to a purchase requestor who requests to purchase a specific used car, thereby further promoting sales of used cars.

In the used car sales support system 10 according to this embodiment, only pieces of information related to used cars without transfer of used cars can be distributed between the sales requestor and franchiser 100 or 200, between the purchase requestor and franchiser 100 or 200, and between the auctioneer 300 and franchiser 100 or 200. In this case, the franchiser 100 or 200 can support sales of used cars while getting rid of a risk in terms of inventory.

The sales support system according to the present invention has exemplified the used car sales support system for supporting sales of used cars. However, the present invention is also applicable to sales support systems for supporting sales of other articles.

### Industrial Applicability

The present invention is used to support sales between a sales requestor who requests to sell an article and a purchase requestor who requests to purchase the article.

## Claims

1. A sales support system **characterized by** comprising:
first input means for receiving an input of information related to an article sales-requested by a sales requestor who requests to sell the article;
storage means for storing information related to the sales-requested article and received by said first input means;
first presenting means for presenting the information related to the sales-requested article and stored in said storage means to a purchase requestor who requests to purchase an article; and
second presenting means for presenting, to an auctioneer who sells the sales-requested article at an auction, the information related to the sales-requested article so as to sell the sales-requested article at the auction when a predetermined period of time has elapsed upon receiving the information related to the sales-requested article by said first input means.

2. A sales support system according to claim 1, **characterized in that**
said sales support system further comprises second input means for receiving an input of information related to an article purchase-requested by the purchase requestor, and
said first presenting means extracts information related to a specific sales-requested article from the information related to the sales-requested articles and stored in said storage means on the basis of the information related to the purchase-requested article and received by said second input means, and presents the extracted information related to the specific sales-requested article to the purchase requestor.

3. A used car sales support system **characterized by** comprising:
first input means for receiving an input of information related to a used car sales-requested by a sales requestor who requests to sell the used car;
storage means for storing information related to the sales-requested used car and received by said first input means;
first presenting means for presenting the information related to the sales-requested used car and stored in said storage means to a purchase requestor who requests to purchase a used car; and
second presenting means for presenting, to an auctioneer who sells the sales-requested used car at an auction, the information related to the sales-requested used car so as to sell the sales-requested used car at the auction when a predetermined period of time has elapsed upon receiving the information related to the sales-requested used car by said first input means.

4. A used car sales support system according to claim 3, **characterized in that**
said sales support system further comprises second input means for receiving an input of information related to a used car purchase-requested by the purchase requestor, and
said first presenting means extracts information related to a specific sales-requested used car from the information related to the sales-requested articles and stored in said storage means on the basis of the information related to the purchase-requested used car and received by said second input means, and presents the extracted information related to the specific sales-requested used car to the purchase requestor.

5. A sales support method **characterized by** comprising:
the first input step of receiving, using first input means, an input of information related to a sales-requested article requested by a sales requestor who requests to sell the article;
the storage step of storing, in storage means, information related to the sales-requested article which is received in the first input step;
the first presenting step of presenting, using presenting means, the information related to the sales-requested article and stored in the storage step to a purchase requestor who requests to purchase an article; and
the second presenting step of presenting, to an auctioneer who sells the sales-requested article at an auction using the presenting means, the information related to the sales-requested article so as to sell the sales-requested article at the auction when a predetermined period of time has elapsed upon receiving the information related to the sales-requested article in the first input step.

6. A sales support method according to claim 5, **characterized in that**
said sales support method further comprises the second input step of receiving an input of information related to an article purchase-requested by the purchase requestor, and
the first presenting step comprises extracting information related to a specific sales-requested article from the information related to the sales-requested articles and stored in said storage means on the basis of the information related to the purchase-requested article and received by said second input means, and presenting the extracted information related to the specific sales-requested article to the purchase requestor.

7. A used car sales support method **characterized by** comprising:
the first input step of receiving, using first input means, an input of information related to a sales-requested used car requested by a sales requestor who requests to sell the used car;
the storage step of storing, in storage means, information related to the sales-requested used car which is received in the first input step;
the first presenting step of presenting, using presenting means, the information related to the sales-requested used car and stored in the storage step to a purchase requestor who requests to purchase a used car; and
the second presenting step of presenting, to an auctioneer who sells the sales-requested used car at an auction using the presenting means, the information related to the sales-requested used car so as to sell the sales-requested used car at the auction when a predetermined period of time has elapsed upon receiving the information related to the sales-requested used car in the first input step.

8. A used car sales support method according to claim 7, **characterized in that**
said sales support method further comprises the second input step of receiving an input of information related to a used car purchase-requested by the purchase requestor, and
the first presenting step comprises extracting information related to a specific sales-requested used car from the information related to the sales-requested articles and stored in said storage means on the basis of the information related to the purchase-requested used car and received by said second input means, and presenting the extracted information related to the specific sales-requested used car to the purchase requestor.
